Europäisches Patentamt

(19) European Patent Office

Office européen des brevets

(11) Publication number : **0 445 954 A2**

# (12) EUROPEAN PATENT APPLICATION

(21) Application number : **91301586.3**

(22) Date of filing : **27.02.91**

(51) Int. Cl.$^5$ : **G06F 9/46**

(30) Priority : **05.03.90 US 488647**

(43) Date of publication of application :
**11.09.91 Bulletin 91/37**

(84) Designated Contracting States :
**DE FR GB**

(71) Applicant : **International Business Machines Corporation**
**Old Orchard Road**
**Armonk, N.Y. 10504 (US)**

(72) Inventor : **Ashlad, Yeturu**
**1632-D West 6th**
**Austin, Texas 70703 (US)**
Inventor : **Chang, Daniel T.**
**1126 Olive Branch Lane**
**San Jose, California 95120 (US)**

(74) Representative : **Killgren, Neil Arthur**
**IBM United Kingdom Limited Intellectual**
**Property Department Hursley Park**
**Winchester Hampshire SO21 2JN (GB)**

(54) Synchronising concurrent processes in a computer system.

(57) A method is provided for synchronising concurrent processes in a computer system. Each process has a virtual time. When messages are received and acted upon by a process, and such messages have a receive time greater than or equal to the current virtual time of the process, state consistency can be assumed. If guard checking is enabled, the guards preferably must still be satisfied before the message will be acted upon. If the time of receipt for the message is less than the current virtual time, further state consistency checks are made. Such consistency checks can include checking of variable versions and guards for consistency. If the process state is consistent with the contents of the message, the message can be processed even though the current virtual time is greater than the receive time of the message. The same general approach can also be used within a process having concurrent actions, with shared variables being checked for state consistency using virtual time stamps and variable versions.

*Fig. 1*

# SYNCHRONISING CONCURRENT PROCESSES IN A COMPUTER SYSTEM

This invention relates generally to electronic computer systems, and more specifically to controlling the operation of concurrent processes within a computer system.

A computer application executes in a concurrent manner when a collection of logical processes share the work required of that application. A process may be a program in a multi-programming environment, the activity of a processor in a multi-processor or multi-computer system, a transaction accessing a database concurrently with other transactions, or an object in object-oriented computations.

Concurrent processes may be categorised as being tightly coupled or loosely coupled. Tightly coupled processes interact by sharing variables in a commonly accessed memory space. Loosely coupled processes interact by passing messages between processes, with each process having sole access to its memory space.

With loosely coupled processes, messages can be passed asynchronously, which allows a unidirectional transfer of information between processes. Messages may also be passed synchronously, which allows either unidirectional or bidirectional information transfer.

General approaches to synchronisation can be categorised as being either pessimistic or optimistic. Pessimistic approaches prevent incorrect sequencing of concurrent operations from ever occurring. This is accomplished by ensuring that the global state of a system is consistent with an operation prior to performing that operation. Optimistic approaches perform sequencing based on locally available information, and perform rollback to a previously consistent state if it later turns out that operation sequencing was incorrect. Pessimistic approaches spend a proportionally greater period of time checking global system states prior to performing an operation, and do not need to repeat operations. Optimistic approaches spend a minimum amount of time checking the local system state prior to performing an operation, but occasionally must perform some operations more than once after a rollback occurs.

A number of basic approaches have been used to facilitate concurrent process synchronisation. These include the use of guards, data versions, and event indices. Guards are predicates associated with each action of a process. The guard of an action must be true before execution of that action is allowed.

The use of data versions involves tagging changes made to data utilised by concurrent computations so that their order corresponds to the correct computational order. Processes are associated with the versions of data that they create and access. One example of the use of this approach is multi-version concurrency control for databases.

Event indices, such as time stamps or sequence numbers, are used to tag the events of concurrent computations in such a manner that their order corresponds to the causal order of events. These indices can be used to synchronise concurrent computations by associating events with processes. One example of such an approach is the Time Warp mechanism developed by D.R. Jefferson, and described in "Virtual Time," David R. Jefferson, ACM Transactions on Programming Languages and Systems, Volume 7, No. 3, July 1985, pages 404-425. This mechanism is based on an asynchronous message passing model using an optimistic approach. Local processes each have an associated local virtual time. Messages passed between processes are stamped with a virtual time at which they should be received. When a process receives a message, if the receive time of the message is less than the current virtual time of the process, the process has already progressed beyond the point at which the message should have arrived. In such event, the process is rolled back to a virtual time prior to the receive time of the message. This can involve undoing a number of actions, after which the process is restarted and the received message acted upon.

One of the problems with the Time Warp mechanism is that it can be much less efficient than it has to be. Processes are always rolled back whenever a message is received having a smaller receive time than the current virtual time of the process. In some cases, when the process is restarted after processing this message, computation proceeds exactly as before. In other words, the contents of the message, and the processing thereof, had no effect on any of the actions which were rolled back. Since rolling a process back and reperforming its actions is expensive, unnecessary rollbacks should be avoided if at all possible.

Similar considerations arise when concurrent actions within a process share data. Use of a time stamp ordering approach for shared variables within a process gives rise to the same inefficiencies described above with relation to the Time Warp mechanism.

According to the invention we provide a method of operating a computer system of the type adapted to run two or more concurrent processes, in which messages including variable data are transferred between processes, characterised by allocating a message time to each message sent by a sending process, comparing such message time with a local time maintained by a receiving processor and, if the message time is less than said local time, either processing the message if its contents are consistent with the current state of the receiving process or otherwise rolling the receiving process back to a state consistent with such contents.

In a preferred embodiment of the invention each process has a virtual time. When messages are received and acted upon by a process, and such messages have a receive time greater than or equal to the current virtual time of the process, state consistency can be assumed. If guard checking is enabled, the guards preferably must still be satisfied before the message will be acted upon. If the time of receipt for the message is less than the current virtual time, further state consistency checks are made. Such consistency checks can include checking of variable versions and guards for consistency. If the process state is consistent with the contents of the message, the message can be processed even though the current virtual time is greater than the receive time of the message. The same general approach can also be used within a process having concurrent actions, with shared variables being checked for state consistency using virtual time stamps and variable versions.

In order that the invention may be well understood, this preferred embodiment thereof will now be described with reference to the accompanying drawings, in which:-

Figure 1 is a timing diagram illustrating message passing between concurrent processes;

Figure 2 illustrates a data structure showing information to be included in a message passed between concurrent processes;

Figure 3 is a high level block diagram illustrating arrival of a message at a process;

Figure 4 is a flow chart illustrating a preferred set of state consistency checks to be performed by a process upon receipt of an inter-process message;

Figure 5 is a timing chart giving an example of the method of Figure 4; and

Figure 6 is a set of data structures created during application of the preferred method to concurrent actions within a process.

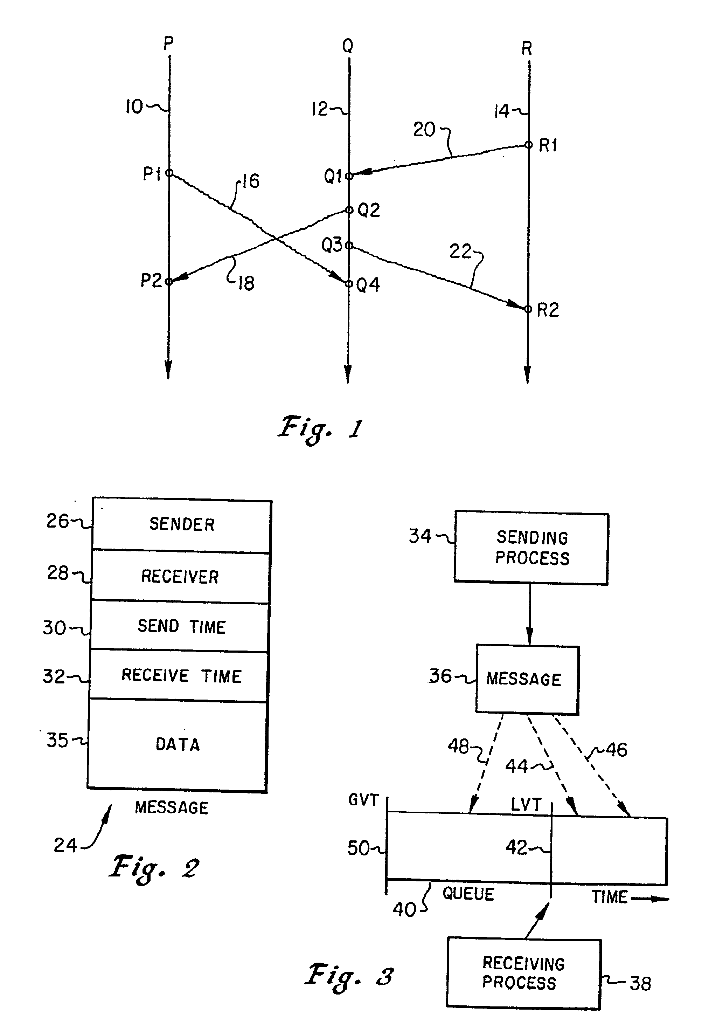

Referring to Figure 1, concurrent execution of processes P, Q, and R is illustrated diagramatically. Arrow 10 represents the progress of process P, while arrows 12 and 14 represent the progress of processes Q and R, respectively. Moving down each of the lines 10, 12, 14 represents more work accomplished by each of the processes.

Circled points on the time lines 10, 12, 14 represent events, or actions, within a process, and the wavy lines 16, 18, 20, 22 represent messages sent between processes. Each message is sent at a local virtual time of the sending process, and received at a local virtual time of the receiving process. For example, message 16 is sent at the local virtual time of process P represented by event P1, and received at the local virtual time of process Q represented by event Q4.

The sending of messages between the various processes establishes a precedence relation between various events within those processes. If a path can be drawn from one event to another along the process time lines 10, 12, 14 and the message lines 16, 18, 20, 22, then those processes must be executed in a prescribed order. For example event P1 must be performed before event Q4 and event R1 must be performed before event P2. If no path can be traced between two events, they are truly concurrent and may be executed in any order. For example, event P1 is concurrent with any of the events R1, Q1, Q2, Q3, and R2. Event Q4 is concurrent with events P2 and R2.

Figure 2 shows the contents of a message 24 which are used to provide concurrency control according to the present invention. Additional control signals and information, not required for process synchronisation according to the present invention, can be included but are not shown. Each message includes an identifier of the sending process 26 and the receiving process 28. The local virtual time of the sending process 30 at the time the message is sent is included. A required receive time 32 is attached to the message, followed by whatever data 35 the message includes.

The receive time 32 of the message 24 is represented as a virtual time which is greater than or equal to the send time 30 of the sending process. The receiving process should read and process the message 24 at the receive time 32. If the sending process does not care what the virtual time of the receiving process is when the message 24 is processed, it may place a special indicator, such as NULL, into the receive time field 32 of the message 24.

Figure 3 illustrates the passing of a message between two processes. A sending process 34 generates a message 36, and fills in the information therein as described in connection with Figure 2. The message 36 is then transmitted to a receiving process 38 using whatever mechanism is provided by the system. In the case of a multi-processor system or a multi-computer linkage, the message 36 may be passed over a system bus or a network, respectively. If the concurrent processes are all executing on a single processor, the message 36 is typically transferred through information placed into a global system area.

The receiving process 38 generally does not act on a message 36 as soon as it arrives. Instead, the message 36 is placed into a queue 40. Queue 40 is a priority queue with arrived messages ordered by message receive times 32. Receiving process 38, when it is ready to select a message from queue 40, selects the as yet unprocessed message with the smallest required receive time 32.

Receiving process 38 has a local virtual time represented by indicator line 42. Each time process 38 takes a message from the queue 40, it advances its local virtual time 42 to the receive time 32 of the message. If message 36 arrives in the queue 40 when the local virtual time 42 of the process 38 is less than the receive time 32 of the message 36, it is placed into the queue 40 at a location which will cause it to be processed in the future as indicated by arrows 44 and 46.

Sometimes message 36 will have a receive time 32 which is less than the local virtual time 42, as indicated by arrow 48. This means that the virtual time of receiving process 38 has already advanced beyond the point at which it should have processed message 36. Under prior art systems, such as the Time Warp mechanism described in the background of the invention, the local virtual time of receiving process 38 must be rolled back to a value prior to the receive time 32 of message 36. This involves undoing all actions which were performed between a local virtual time corresponding to the receive time 32 and the current local virtual time 42.

The process of performing a rollback involves returning the receiving process 38 to an earlier, saved, state and cancelling any messages which might have been sent in the interim period. Details of how this is to be performed, involving the saving of a copy of all transmitted messages in an outgoing queue of a process and the transmitting of antimessages to cancel such already sent messages in the event of a rollback, is described in further detail in the "Virtual Time" paper by D.R. Jefferson cited above. A global virtual time 50 is, generally, a virtual time which is at least as old as the oldest unprocessed message waiting in a queue 40 for any process, or currently in transit within the system. As described in the Jefferson reference, the global virtual time 50 represents a virtual time beyond which rollbacks do not occur, and all processes may discard messages and interim saved process states which are earlier than the global virtual time.

Since various processes are operating at virtual times which are independent from each other, it is not unusual for message 36 to have a receive time 32 which is older than the current local virtual time 42 of the receiving process 38. This means that process 38 must be rolled back to a virtual time prior to the receive time 32 of the message 36, which is a fairly time and resource intensive procedure. In many cases the roll back may not even be necessary, because the contents of the message 36 had no effect upon the actions which were undone during the roll back.

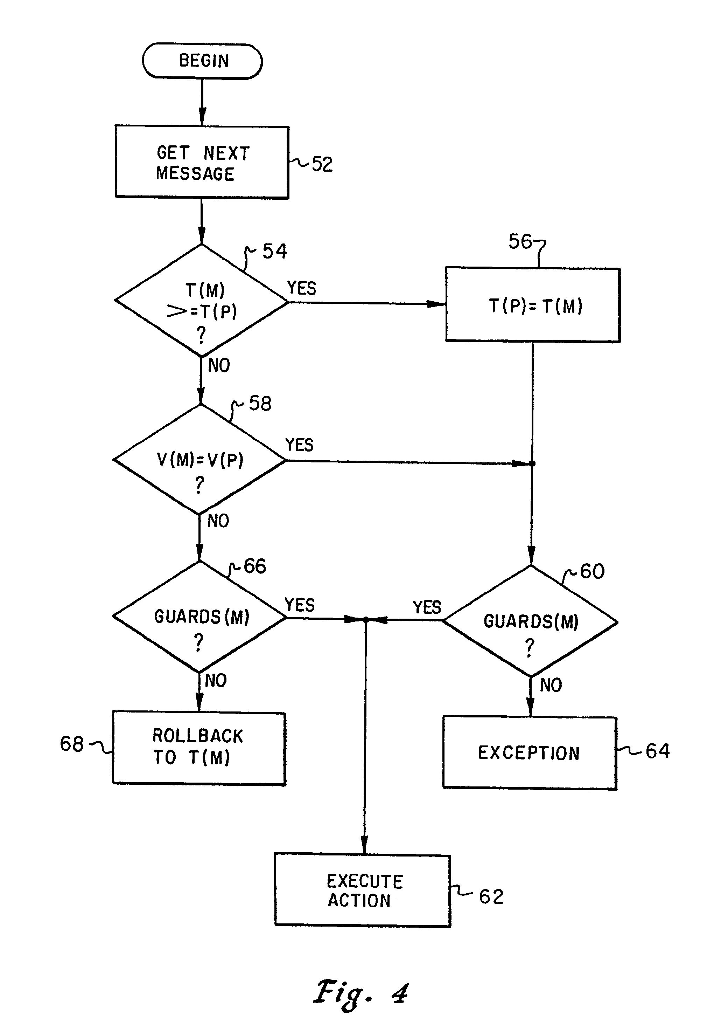

Figure 4 is a flow chart of a preferred procedure utilised by the receiving process 38 when taking up the message in the queue 40 in order to determine whether it should be acted upon or whether a rollback is required. The first step is for receiving process 38 to select the next message from the queue 52. The selected message is that message in the queue 40 which has the earliest receive time 32 of any pending messages not yet acted upon. A comparison 54 is then made to see whether the message receive time T(M) is greater than or equal to the current local virtual time T(P) of the process. If the receive time of the message is greater than the current local virtual time, the local virtual time is advanced and set equal to the receive time of the message 56. If the message time is less than the local virtual time, the process is not automatically rolled back; instead a check is made 58 to determine whether any variables referenced within the message V(M) are different from the process variable versions V(P) currently within the receiving process 38. As known in the art, these process variable versions are retained by the process in order to allow rollback to an earlier state if that should become necessary. In step 58, the check is being made to see whether the variables necessary to process the received message are consistent with the current state of the process.

If the answer to the test of step 58 is yes, it is not necessary to roll the process back to an earlier state. The variables necessary for processing of the message have not changed while the receiving process 38 has moved on to a later virtual time, and undoing all of the interim actions during a rollback would be unnecessary. The current state of the process is consistent with its state at the earlier virtual time as far as the message is concerned, so control is allowed to pass to step 60.

Step 60 is a checking step to see whether the predicates of any guards corresponding to the message, provided in the receiving process 38, are satisfied. Guards are predicates known in the art which are used to cause processing of one or more actions to be delayed until predetermined requirements have been met. If the guards are satisfied when step 60 is reached, control passes to step 62 and the action necessary for processing the received message is executed. If the guards are not satisfied, an exception occurs 64. Preferably, an exception handler will not immediate indicate an error. The guards may become satisfied as a result of a rollback caused by a not-yet-arrived message. Since such a rollback can occur to any virtual time later than the global virtual time, the exception handler preferably does not signal an error until the global virtual time becomes larger than or equal to the local virtual time at which the exception occurred. At this point, since it is not possible to roll any process back to a time earlier than the global virtual time, the error caused by the failure to satisfy the guards cannot be undone and the error is then signaled.

If the process variable states are not consistent, indicated by taking the NO branch from step 58, the process-action guards are checked 66 in the same manner as they are in step 60. If the action guards are satisfied, the relative virtual time and process versions checked in steps 54 and 58 are irrelevant, and the action is executed 62. If control reaches step 66

and the guards are not satisfied, the local virtual time of the process is immediately rolled back **68** to a value prior to the receive time T(M) of the message.

The three types of tests set forth in **Figure 4** can be handled somewhat independently. Thus, the comparison of virtual times in step **54**, the comparison of process variable versions in step **58** and the check of guards represented by steps **60** and **66** need not all be performed. Checking for each of the three parts of the overall process state can be turned on or off individually as required by the system or application designer.

If the variable versions and guard tests are disabled, steps **58**, **60**, **66** are not performed. In such event, a roll back is automatically performed if the receive time of the message is smaller than the current virtual time of the process. This results in a synchronisation mechanism very similar to the Time Warp mechanism described above. If the virtual time comparison **54** and process variable comparison **58** tests are disabled, control passes directly to step **60**. This results in a system which simply checks action-guards in a manner similar to that known in the art. If a system is operating in this manner, with virtual time being disabled, there is no global virtual time to be checked by an exception handler if the guards are not initially satisfied. In such event, the exception handler merely waits to see if the guards are ever satisfied. If they ever become satisfied, the corresponding action is executed **62**. If the guards never become satisfied, an error condition can be signaled when the system becomes quiescent.

Other combinations of checks can be made as desired and as appropriate to the application or system being designed. Since three independent checks can be made, there are eight possible combinations which can be used to determine the checks to be made. Enabling all three checks as shown in **Figure 4** results in an optimistic, non-deterministic system which minimises the number of rollbacks which must be performed.

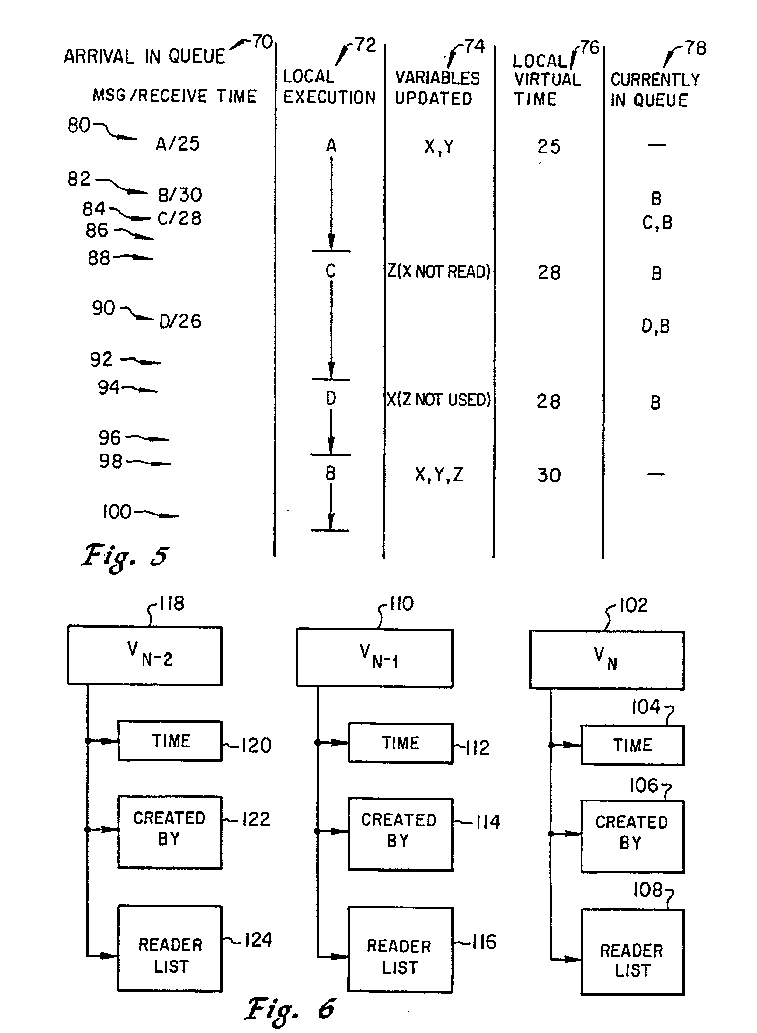

**Figure 5** illustrates a simple example of message processing by a receiving process using the rules described in the flow chart of **Figure 4**. Real clock time increases from top to bottom in **Figure 5**. Column **70** shows the arrival of four different messages. Each message is identified by a single letter, and the required virtual receive time for each message is shown.

Column **72** indicates the time spent by the receiving process to execute the action necessary to respond to the received message. In this simple example, the receiving process can perform sequential actions only. In general, however, it is possible for the receiving process to perform actions in parallel if the underlying system will support such processing.

Column **74** indicates the variables which must be updated during execution of the action necessary to process each incoming message. Column **76** indicates the virtual time of the process while each message is being processed. The local virtual time does not change during processing of a single message. Column **78** indicates the messages currently in a receiving queue **40**, and shows their priority order.

At time **80**, message A arrives and is immediately processed by the receiving process. The local virtual time is advanced to the same value as the required receive time of the message. While message A is being processed, messages B and C arrive at times **82** and **84**, respectively. As shown in column **78**, message C is placed into the queue ahead of message B because its required receive time of 28 is smaller than B's required receive time of 30. Processing of message A completes at time **86**.

At time **88**, the next message in the queue is taken up for processing. This is message C, so that only message B is left in the queue. Since the required receive time of message C is 28, the local virtual time is set equal to 28. At time **90**, message D arrives and is placed in the queue before message B. Processing of message C completes at time **92**, and the next message, D, is taken up for processing at time **94**.

At this point, the required receive time for message D is smaller than the current virtual time of the process. However, the process is not necessarily rolled back to virtual time 26. As shown in column **74**, variables X and Y were updated while processing message A, and variable Z was updated while processing message C. Updating variables requires the creation of new process variable versions but reading them does not, so that new versions are created only for updated variables. As shown in column **74**, variable Z is not used during the processing of messages D, so that the variable versions are consistent. In other words, the updating of variable Z by the processing of message C does not effect the processing of message D. This means that message D can be processed without rolling back to virtual time 26.

At time **96** processing of message D is completed. Message B is then removed from the queue, and processed beginning at time **98**. Processing of message 8 completes at time **100**.

If the processing of message D had accessed the value of variable Z in any manner, the latest value for Z would be incorrect as of the virtual time 26 at which message D should have been processed. This can be handled in two ways: one is to simply roll the local process back to virtual time 26 and redo the processing of message C. Preferably, however, since the values of variables are saved for each version in order to perform rollbacks if necessary, the processing of message D could simply refer to the earlier version of variable Z. This rollback avoidance can only be used if Z is read but not written during processing of message D. If the processing of message D causes the variable Z, or any variable read by the processing of message C, to be changed, then the process should be rolled back to virtual time 26. For example, if the processing of message C read the value of variable X, which should have been changed during processing of message D at an earlier virtual time, the processing of message C must be redone.

The above described decisions to rollback or not rollback based upon variable versions can, of course, be overridden by successfully checking the guards as shown in step 66 of **Figure 4**.

As described above, the receive time 32 of the message 24 must be greater than or equal to the send time 30. If the receive time 32 is greater than the send time 30, asynchronous (in virtual time) message passing occurs between processes. If the send time 30 and the receive time 32 are equal, synchronous (in virtual time) message passing has occurred. This means that, at some point within the virtual space defined by the states of various processes, the sending and receiving processes of a message reach the same state at the same virtual time. This is similar to the technique of performing a rendezvous in certain programming languages such as Ada.

With such a synchronous communication, the sending process can wait until the receiving process has become synchronised at the same virtual time. This can occur by the receiving process either advancing its virtual time to the required receive time of the message, or performing a rollback to such virtual time. The receiving process can then generate a return message to the sending process if such is called for. When this occurs, the two processes have become linked, or synchronised, in order to perform a data exchange. After any events to be performed at synchronisation occur, the two processes can resume independent execution.

As illustrated in connection with **Figure 5**, the virtual time of the receiving process may be larger than the required receive time of the message if variable version equality prevents the rollback which would otherwise be required by the virtual receive time of the message. However, such a situation is not consistent with synchronising the virtual times of two processes if a synchronous message is passed. Therefore, the preferred embodiment requires that a rollback to the message time of a synchronous message will always be performed, regardless of the equality of process variable versions or satisfaction of guards. This allows the receiving process to send a return message which has the same virtual time as the synchronising message, since the virtual time of the receiving process has been rolled back.

The approach of using virtual times and process versions to determine when rollbacks must occur can also be used within a single process to synchronise the activities of concurrent actions within the process. When a new version of a process variable is created, the virtual time at which it was created and the action which created it are recorded with the version. Only actions within the process having the same or a larger virtual time may read any given version. A list of all the actions which have read a version is kept with each version, in order to simplify rollback procedures when such becomes necessary.

Referring to **Figure 6**, a data structure is shown for keeping track of process variable versions according to the present invention. A current version of a process variable 102 contains pointers to the virtual time of its creation 104, and an identifier of the action which created it 106. A reader list 108 is also attached to the variable 102, and identifies the action and virtual time for each action which reads the variable 102. A previous version of the same variable 110 also contains the virtual time 112 and creating action 114 of its creation, and a reader list 116 of all actions which have read the previous version of the variable 110. An even earlier version 118 of the same variable likewise contains a creation time 120, a creating action identifier 122, and a reader list 124.

The following rules for accessing a variable suffice to ensure correct synchronisation of concurrent actions within a process:

(1) Only actions having the same or a larger virtual time than time 104 may read the current version 102 of the variable. An action having an earlier virtual time may only read an earlier version of the variable. Each action always reads the latest version of a variable which it is allowed to read.

(2) When a new version of a process variable is created, the creation time must be larger than the creation times of all already existing versions of the same variable. All actions which created existing versions having a larger virtual time must be rolled back. In addition, all actions on the reader lists of such versions must also be rolled back. When a new version is created, all actions on the reader list of the immediately previous version which should read this new version instead are also rolled back. An example of this would be an existing variable version having a virtual creation time of 10 which had been read by another action at virtual time 15. If a newer version of such variable is created at virtual time 13, the action which read the earlier version at virtual time 15 must be rolled back to allow it to read the more recent version created at virtual time 13.

(3) Each process variable version may be modified only by the action which created it, as identified in blocks 106, 114, 122. Such modification may be made only at the same virtual time as the creation time. Whenever a version of a variable is so modified, all actions on the reader list of the variable are rolled back, since they have equal or later virtual times for reading the variable and must be allowed to read the newly modified variable.

The rollbacks described in connection with **Figure 6** are in addition to the rollbacks which occur due to the tests outlined in connection with **Figure 4**. The retention of creation time and variable versions as just described ensures synchronisation of concurrent actions within a process when shared variables are used. This retention of variable versions also allows a process to use an earlier variable version to satisfy read requests for a variable when processing a message having a required receive time earlier than the current virtual time of the process as described in the example of **Figure 5**. When virtual time is combined with variable versions as described herein and applied to interprocess communications as well as intraprocess sharing of variables between concurrent actions, complete state consistency is maintained within the system.

The technique described above can also be applied to concurrent object-oriented computations. In such computations, each object corresponds to a logical process, the attributes of an object corresponds to the process variables, and the methods of an object correspond to process actions. In such a system, virtual time, object-attribute versions, and object-method preconditions are used to synchronise the concurrent object-oriented computations. This is directly analogous to the described use of virtual time, process variable versions, and guards for traditional concurrent processes, and can be implemented in the same manner.

The system and method herein described for synchronising concurrent processes and concurrent actions within a process improves the efficiency of a typical system containing concurrent processes. The number of rollbacks of a process which must occur is decreased because it is not always necessary to roll a process back for every received message having a required receive time less than the current virtual time of the process. In addition, when actions are delayed because the quards are not satisfied, a later required rollback is greatly simplified because no further changes have been made to the state of the process and no messages have been generated. Messages can be passed synchronously or asynchronously between concurrent processes. Synchronous messages allow two processes to synchronise their activity in virtual time. The applications programmer need not be concerned with functioning of the virtual process time and variable version checks, since their operation can be handled by the operating system in a manner transparent to him. Since correct synchronisation is ensured using the above techniques, the applications programmer can assume that all actions which need to be performed prior to others will be so performed.

While the invention has been particularly shown and described with reference to a preferred embodiment, it will be understood by those skilled in the art that various changes in form and detail may be made therein without departing from the spirit and scope of the invention.

## Claims

1. A method of operating a computer system of the type adapted to run two or more concurrent processes, in which messages including variable data are transferred between processes, characterised by allocating a message time to each message sent by a sending process, comparing such message time with a local time maintained by a receiving processor and, if the message time is less than said local time, either processing the message if its contents are consistent with the current state of the receiving process or otherwise rolling the receiving process back to a state consistent with such contents.

2. A method as claimed in claim 1, in which the consistency or otherwise of said message contents is determined by comparing process variable versions of the receiving process with variable versions required to process the message; and defining the message contents to be inconsistent with the current state of the second process if the variable versions of the variables required to process the message are different from the current versions of the same variables for the second process.

3. A method as claimed in claim 2, including the steps, if the variable versions required to process the message are different from the current process variable versions of the receiving process, of determining the values of guard predicates for the process actions required to process the message; and defining the message contents to be inconsistent with the current state of the receiving process if the guard predicates are not satisfied.

4. A method as claimed in any preceding claim comprising the further step, if the message time is larger than said local time setting said local time to the value of the message time when the message is processed.

5. A method as claimed in any preceding claim wherein the step of processing the message comprises the steps of performing one or more process steps of the receiving process; and returning a result message to the sending process.

6. A method as claimed in claim 5, wherein the result message has a message time equal to the value of the message time of the original message.

7. A method as claimed in any preceding claim wherein the first and second processes comprise objects in an object-oriented system.

8. A method as claimed in any preceding claim wherein the allocated message time is an intended receive time, and wherein the message also contains a value indicating a local virtual time of the sending process at the time the message is sent.

9. A method as claimed in claim 8 wherein the intended receive time and the virtual time of sending have the same value.

10. A method as claimed in any preceding claim, for ensuring consistency of concurrent actions within a process, comprising the steps,

when a new version of a process variable is created, of associating a process virtual time and identity of a creating action with such variable wherein the creation time must be larger than the creation time of all existing versions of such variable;

when a process action reads a variable, of causing the action to read the latest version of the variable having a virtual time less than or equal to the process virtual time when the action is performed, and adding an identifier of the action and a virtual time at which it is performed to a list associated with the variable version and,

if a version of a variable is created having a virtual time less than any already existing versions, of rolling back all actions which created or read such already existing versions

wherein only an action that created a particular version of a variable can modify that version, wherein such modification can only be made at the same process virtual time as such version was created, and wherein any actions identified in the reader list associated with the variable version are rolled back when such variable version is modified.

*Fig. 1*

*Fig. 2*

*Fig. 3*

*Fig. 4*

| ARRIVAL IN QUEUE /70 | | LOCAL /72 | VARIABLES /74 | LOCAL /76 | CURRENTLY /78 |
|---|---|---|---|---|---|
| MSG /RECEIVE TIME | | EXECUTION | UPDATED | VIRTUAL TIME | IN QUEUE |
| 80 | A/25 | A | X,Y | 25 | — |
| 82 | B/30 | | | | B |
| 84 | C/28 | | | | C,B |
| 86 | | | | | |
| 88 | | C | Z(X NOT READ) | 28 | B |
| 90 | D/26 | | | | D,B |
| 92 | | | | | |
| 94 | | D | X(Z NOT USED) | 28 | B |
| 96 | | | | | |
| 98 | | B | X,Y,Z | 30 | — |
| 100 | | | | | |

**Fig. 5**

**Fig. 6**

| $V_{N-2}$ (118) | $V_{N-1}$ (110) | $V_N$ (102) |
|---|---|---|
| TIME ~120 | TIME ~112 | TIME 104 |
| CREATED BY ~122 | CREATED BY ~114 | CREATED BY 106 |
| READER LIST ~124 | READER LIST ~116 | READER LIST 108 |